# EUROPÄISCHE PATENTSCHRIFT

(11) **EP 0 372 118 B1**
(45) Veröffentlichungstag und Bekanntmachung des Hinweises auf die Patenterteilung: **10.11.1993**
(21) Anmeldenummer: 88120585.0
(22) Anmeldetag: 09.12.1988
(51) Int. Cl.: F16D 13/64, F16D 65/12

(54) **Reibelement mit einer Spannbuchsenverbindung von Reibbelagträger und Nabe**
Friction element with a clamping sleeve connection between friction hub and hub
Elément de friction présentant une liaison par douille de serrage entre le porte-garniture et son moyeu

(43) Veröffentlichungstag der Anmeldung: 13.06.1990
(73) Patentinhaber: Borg-Warner Automotive GmbH, D-69123 Heidelberg (DE)
(72) Erfinder: Vögele, Richard, D-6831 Altlussheim (DE)
(74) Vertreter: Meyer-Roedern, Giso, Dr.

(56) Entgegenhaltungen:
- DE-A- 2 615 651
- DE-A- 2 824 676
- US-A- 2 293 491
- US-A- 2 437 537
- US-A- 4 177 883

## Beschreibung

Die Erfindung betrifft ein Reibelement, insbesondere eine Kupplungsscheibe, Bremsscheibe oder dergleichen, mit einer Reibflächen aufweisenden Scheibe, mit einer inneren Nabe, die dicker ist als die Scheibe und durch in fluchtenden Bohrungen unverlierbar einsitzende, zur Scherkraft- und damit Drehmomentübertragung dienende Federhülsen spielfrei fest mit der Scheibe verbunden ist, und mit die Federhülsen durchsetzenden Befestigungselementen, die die Federhülsen fixieren.

Ein solches Reibelement ist aus der DE-A-28 24 676 bekannt. Die Druckschrift beschreibt eine Verbindung zwischen einer Bremsscheibe und einer Habe mit Bolzen, um die herum geschlitzte Federhülsen liegen. Die Bolzen werden einends durch ihren Kopf und eine Beilegscheibe und andernends durch eine zweite Beilegscheibe gesichert, die durch eine aufgeschraubte Mutter festgehalten wird. Unter beengten Platzverhältnissen soll der Bolzen in nicht näher dargestellter Weise durch einen Mitnehmer- oder Federstift gesichert werden. Die Federhülsen kompensieren Unterschiede im Durchmesser der Montagebohrungen von Haben und Bremsscheibe sowie Fluchtungsfehler. Bei einer Beaufschlagung der Bremsscheibe werden Bolzen und Federhülsen zur Bremsmomentübertragung auf Scherung beansprucht und ein Großteil der Scherkräfte von den Federhülsen aufgenommen.

Nachteilig bei der bekannten Bolzenverbindung ist die große Zahl von Einzelteilen. Der Montageaufwand beim Setzen und Anziehen der Bolzen ist hoch. Auch werden dabei möglicherweise Verspannkräfte auf die Federhülsen ausgeübt, die zu Verwerfungen der Scheibe führen können, insbesondere wenn diese dünn ist.

Aufgabe der Erfindung ist es, ein Reibelement der eingangs genannten Art anzugeben, bei dem die Scheibe und Nabe in einer platzsparenden, herstellung- und montagetechnisch wenig aufwendigen Weise verbunden sind, die eine dauerfeste Drehmomentübertragung und Verformungsfreiheit der Scheibe gewährleistet, insbesondere wenn diese dünn ist.

Diese Aufgabe wird mit einem derartigen Reibelement dadurch gelöst, daß die Scheibe Reibbeläge trägt, und daß die Befestigungselemente umbördelbare Montagehülsen sind, die die Scheibe und Nabe im umgebördelten Zustand axial zusammenhalten.

Die umgebördelten Montagehülsen sichern in unaufweniger Weise die Federhülsen, und sie halten das Reibelement formschlüssig axial zusammen, ohne Verspannkräfte auf die Federhülsen auszuüben. Der mit dem Setzen und Umbördeln der Montagehülsen einhergehende Aufwand ist gering, und es ergibt sich ein kompakter Aufbau.

Die Federhülsen können aus gehärtetem Stahl bestehen und einen in Längsrichtung geschlitzten zylindrischen Hülsenkörper aufweisen, der an wenigstens einem, vorzugsweise aber beiden Enden mit einer Fase sowie gegebenenfalls mit sich in Schlitzlängsrichtung erstreckenden Fasen versehen sein kann. Die Federhülsen sind vorzugsweise so dimensioniert, daß sie mit Vorspannung in den Bohrungen der Scheibe und der Nabe aufgenommen sind. Die Schlitzenden der Federhülsen liegen im montierten Zustand aneinander an oder mit geringem Spiel voneinander entfernt, so daß über den Umfang der Bohrungen annähernd gleich starke Pressungen erzeugt werden. Die Federhülsen stützen sich bei Einleitung des Drehmomentes ab und wirken als geschlossener Ring. Sie sind so elastisch, daß sie sich bei verschiedenen Durchmesser- und Lagetoleranzen den Bohrungen anpassen, ohne zur Deformation der Scheibe führende Kräfte auszuüben. Die Federhülsen verhalten sich wegen ihrer Federeigenschaften elastisch pulsierend. Das bringt eine gleichmäßigere Pressungsverteilung in den Bohrungen und eine Verbesserung der dauerfesten Verbindung mit sich.

Die die Federhülsen durchsetzenden, Scheibe und Nabe in axialer Richtung zusammenhaltenden Montagehülsen sind vorzugsweise in Längsrichtung geschlitzt und sitzen ohne Vorspannung in den Federhülsen. Die Montagehülsen tragen nicht oder nicht nennenswert zur Drehmomentübertragung bei, sondern haben nur die Funktion, das Reibelement in axialer Richtung zusammenzuhalten und die Federhülsen in ihrer Einbauposition zu sichern. Die Montagehülsen können einen an beiden Enden umbördelbaren Hülsenkörper aus einem Material aufweisen, das sich ohne große Verformungsarbeit plastisch deformieren läßt. Ein bevorzugtes Material ist weicher Stahl. Beim Umbördeln von Hülsenkörpern aus diesem Material treten keine Pressungen auf, durch die die Ebenheit der als Belagträger dienenden Scheibe beeinträchtigt werden könnte.

Die Nabe des Reibelements besteht vorzugsweise aus zwei auf beiden Seiten der Scheibe angeordneten Nabenplatten. Damit wird eine gleichmäßige Einleitung der Kräfte und Momente und eine entsprechend hohe Belastbarkeit erzielt. Die Nabenplatten können mit dem gleichen Formwerkzeug, insbesondere einem Präzisions-Stanzwerkzeug, hergestellt sein, und in der axialen Ausrichtung und relativen Winkelstellung, mit der sie aus dem Formwerkzeug kommen, d. h. ohne relativen Winkelversatz an der Scheibe angebracht werden. Die unter Vorspannung in die Bohrungen eingesetzten Federhülsen sorgen für eine einwandfreie Ausrichtung der Nabenplatten, die so ohne Teilungsfehler und spielfrei in exakter Flucht mit der Scheibe verbunden sind und entsprechend genau gleiche Traganteile übernehmen. Auch die Zahnflanken der Nabenplatten sind dadurch formgenau ausgerichtet.

Die Erfindung wird im folgenden anhand eines in der Zeichnung dargestellten Ausführungsbeispiels näher erläutert. Es zeigen:

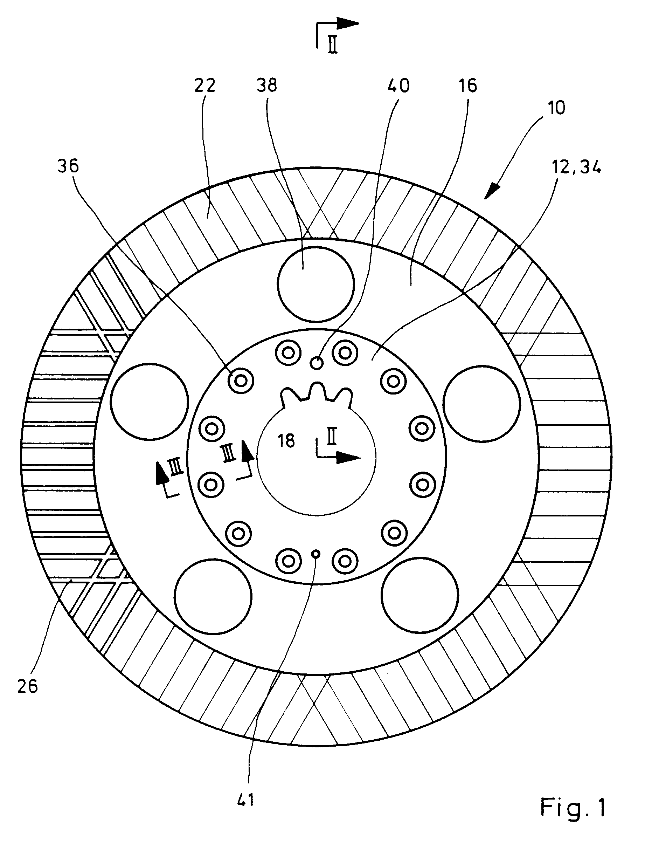

- Fig. 1: die axiale Draufsicht auf eine Bremsscheibe;
- Fig. 2: den axialen Schnitt durch eine Halbseite der Bremsscheibe nach II - II von Fig. 1;
- Fig. 3: als vergrößerte Einzelheit den axialen Schnitt durch eine Verbindungsstelle der Bremsscheibe nach III - III von Fig. 1 und Fig. 4; und
- Fig. 4: einen Schnitt nach IV - IV von Fig. 3.

Die Bremsscheibe 10 weist zwei parallel zueinander angeordnete Nabenplatten 12, 14 auf, zwischen denen eine als Reibbelagträger dienende Scheibe 16 montiert ist. Die Habenplatten 12, 14 sind im wesentlichen kreisringförmig und an ihrem Innenring mit einer Innenverzahnung 18 zur Aufnahme einer Antriebswelle versehen. Die Dicke der Nabenplatten 12, 14 ist abhängig von der im Verzahnungsbereich auftretenden Flächenpressung. Beide Nabenplatten 12, 14 haben am äußeren Teil des Durchmessers eine gleiche Anzahl von in einem konzentrischen Kranz unter gleichem Winkelabstand angeordneten Bohrungen 20.

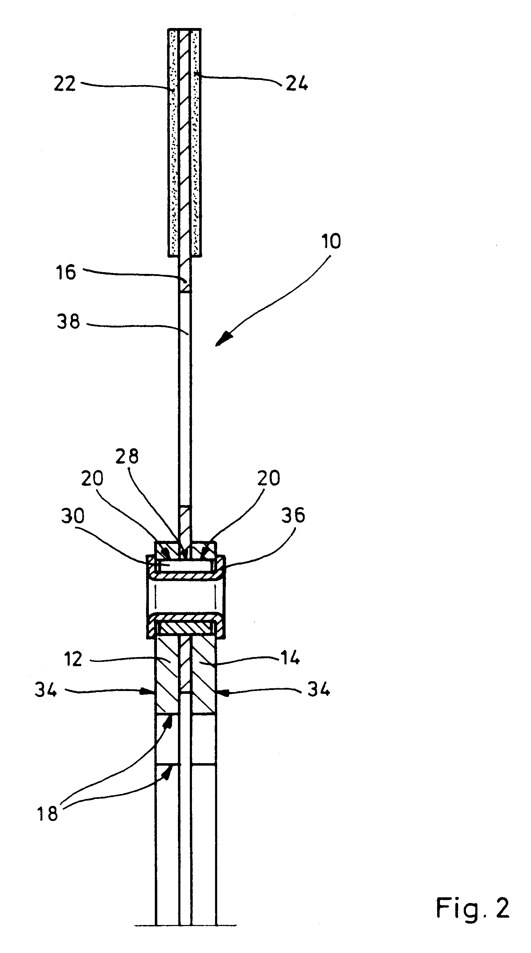

Die Scheibe 16 ist ein Kreisring mit nahe seinem Außenrand beidseits aufgebrachten Reibbelägen 22, 24. Letztere bestehen aus einem asbestfreien organischen Reibwerkstoff und sind mit der Scheibe 16 fest verbunden. Die Reibbeläge 22, 24 sind mit Nuten 26 mit Rillenprofil zu Nutmustern angeordnet, die neben der in Fig. 2 gezeigten Variante jede beliebige andere Ausführung haben können. Vorteile der Nutung sind insbesondere die Erzielung eines schnellen Eingriffes, die Erhöhung der Leistungsfähigkeit der Bremse und ein hoher, gleichbleibender Reibwert. Weiterhin wird die während des Eingriffs und der Rutschphase entstehende Wärme durch den Ölstrom abgeführt.

Der Innendurchmesser der Scheibe 16 ist etwas kleiner als der Außendurchmesser der Nabenplatten 12, 14, so daß bei der Montage zwischen den beiden Nabenplatten 12, 14 eine Überlappung eintritt. Die Scheibe 16 hat auf einem konzentrischen Lochkranz, dessen Durchmesser dem des Lochkranzes der Nabenplatten 12, 14 entspricht, eine der Anzahl von Bohrungen 20 in den Nabenplatten 12, 14 entsprechende Anzahl von unter gleichem Abstand angeordneten Bohrungen 28 desselbe Durchmessers. In der Montagestellung fluchten also je eine Bohrung 20 in der eine Nabenplatten 12, eine Bohrung 28 in der Scheibe 16 und eine Bohrung 20 in der anderen Nabenplatte 14.

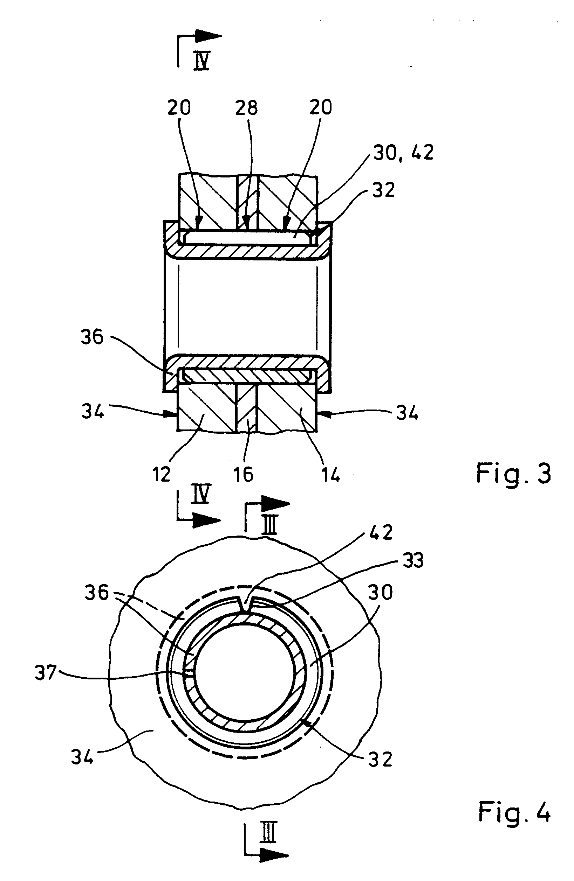

Zum Übertragen des Drehmomentes dienen geschlitzte Federhülsen 30, die vorgespannt in die fluchtenden Bohrungen 20, 28 der beiden Nabenplatten 12, 14 und der Scheibe 16 eingebracht werden. Die Federhülsen 30 können einen in axialer Richtung verlaufenden Längsschlitz 42 haben (vgl. Fig. 4), aber auch in anderer Weise geschlitzt sein. Sie bewirken aufgrund der Vorspannung in den Bohrungen 20, 28 eine Pressung radial nach außen. Das Einstecken der Federhülse 30 in die Bohrungen 20, 28 wird durch an wenigstens einem Ende, vorzugsweise aber beiden Enden der Federhülsen 30 vorgesehene Fasen 32 erleichtert. Auch die Ränder des Längsschlitzes 42 sind mit Fasen 33 versehen. Die Federhülsen 30 nehmen eine axiale Mittelposition in den Bohrungen 20, 28 ein, in der ihre Enden bezüglich der äußeren Stirnfläche 34 der Nabenplatten 12, 14 etwas versenkt zu liegen kommen.

Für den Zusammenhalt des Reibelements in axialer Richtung sowie zur unverlierbaren Halterung der Federhülsen 30 in den Bohrungen 20, 28 sind Montagehülsen 36 vorgesehen, die in je eine der Federhülsen 30 gesteckt werden und dann mit ihren freien Enden beidseits um mehr als die Dicke der Federhülsen 30 über die Stirnflächen 34 der Nabenplatten 12, 14 hinausstehen. Die Montagehülsen 36 weisen einen Längsschlitz 37 auf. Im Gegensatz zu den Federhülsen 30, die aus gehärtetem Federstahl bestehen, kommt als Material für die Montagehülsen 36 weicher Stahl zum Einsatz. Nach erfolgtem Einstecken können die Enden der Montagehülsen 36 daher ohne große Verformungsarbeit umgebördelt werden, so daß sie sich an den äußeren Stirnflächen 34 der Nabenplatten 12, 14 abstützen, um so das Reibelement zusammenzuhalten sowie das Herausrutschen der Federhülsen 30 zu verhindern. Auf diese Art werden die Nabenplatten 12, 14 dreh- und rüttelfest mit der Scheibe 16 verbunden.

In der Abfolge der Montage können zunächst die Federhülsen 30 in die Bohrungen 20, 28 eingesteckt und in einem darauffolgenden Arbeitsgang die Montagehülsen 36 durchgesteckt und umgebördelt werden. Es besteht aber auch die Möglichkeit, die Federhülsen 30 mit den Montagehülsen 36 vorzumontieren und zusammen in die Bohrungen 20, 28 einzusetzen.

Die Scheibe 16 ist zwischen dem Kranz von Montagebohrungen 20, 28 und den ringförmigen Reibbelägen 22, 24 mit einer kleineren Anzahl großer Bohrungen 38 versehen, die ebenfalls auf gleichem Durchmesser und mit gleichem Winkelabstand angeordnet sind. Diese Bohrungen 38 dienen dem besseren Öldurchfluß, und sie bringen eine Gewichtsersparnis mit sich.

Die beiden Nabenplatten 12, 14 sind mit demselben Stanzwerkzeug gefertigte Präzisionsstanzteile. Sie sind in der Weise axial zueinander ausgerichtet, wie sie aus dem Stanzwerkzeug kommen. Bildet also beispielsweise die äußere Stirnfläche 34 die Oberseite der aus dem Stanzwerkeug kommenden Nabenplatte 12, so ist die äußere Stirnfläche 34 der anderen Nabenplatte 14 bei Verlassen des Stanzwerkzeugs deren Unterseite. Die Nabenplatten 12, 14 sind auch in ihrer relativen Winkelstellung so angeordnet, wie sie aus dem Stanzwerkzeug kommen, d. h. mit einem Winkelversatz Null. Sichergestellt ist dies durch je ein Paar fluchtender Pilotbohrungen 40, 41 mit unterschiedlichem Durchmesser in den Nabenplatten 12, 14. Die Pilotbohrungen 40, 41 sind mit einem Winkelabstand von 180° auf einem konzentrischen Lochkreis zwischen den Bohrungen 20 der Habenplatten 12, 14 und der Innenverzahnung 18 angeordnet.

Die Herstellung der erfindungsgemäßen Bremsscheibe ist kostengünstig, da keine spanabhebenden Verfahren eingesetzt werden und Pressen mit relativ kleinen Kräften verwendet werden können. Ein teller- und/oder wellenförmiges Verziehen der Bremsscheibe, wie es bei einer Nietverbindung zwischen Nabe und Scheibe auftritt, wird vermieden, so daß sich die Bremsscheibe durch einen sehr guten Planlauf auszeichnet. Aufgrund der Gestaltung des Nabenbereichs ist die erfindungsgemäße Bremsscheibe sehr kompakt. Sie kann daher auch unter beengten Einbauverhältnissen Verwendung finden, wobei die über die Federhülsen 30 zu übertragenden Drehmomente extrem hoch sind.

### Liste der Bezugszeichen

- 10: Bremsscheibe
- 12: Nabenplatte
- 14: Nabenplatte
- 16: Trägerlamelle
- 18: Innenverzahnung
- 20: Bohrung
- 22: Reibbelag
- 24: Reibbelag
- 26: Nut
- 28: Bohrung
- 30: Spannbuchse
- 32: Fase
- 33: Fase
- 34: äußere Stirnfläche
- 36: Montagehülse (Eisenhülse)
- 37: Längsschlitz
- 38: Bohrung
- 40: Pilotbohrung
- 41: Pilotbohrung
- 42: Schlitz

## Patentansprüche

1. Reibelement, insbesondere Kupplungsscheibe, Bremsscheibe oder dergleichen, mit einer Reibflächen aufweisenden Scheibe (16), mit einer inneren Habe, die dicker ist als die Scheibe (16) und durch in fluchtenden Bohrungen (20, 28) unverlierbar einsitzende, zur Scherkraft- und damit Drehmomentübertragung dienende Federhülsen (30) spielfrei fest mit der Scheibe (16) verbunden ist, und mit die Federhülsen (30) durchsetzenden Befestigungselementen, die die Federhülsen (30) fixieren, dadurch gekennzeichnet, daß die Scheibe (16) Reibbeläge (24) trägt, und daß die Befestigungselemente umbördelbare Montagehülsen (36) sind, die die Scheibe (16) und Nabe im umgebördelten Zustand axial zusammenhalten.

2. Reibelement nach Anspruch 1, dadurch gekennzeichnet, daß die Federhülsen (30) mit Vorspannung in den Bohrungen (20, 28) sitzen.

3. Reibelement nach Anspruch 1 oder 2, dadurch gekennzeichnet, daß die Federhülsen (30) einen in Längsrichtung geschlitzten zylindrischen Hülsenkörper aufweisen.

4. Reibelement nach Anspruch 3, dadurch gekennzeichnet, daß der Hülsenkörper an wenigstens einem Ende mit einer Fase (32) versehen ist.

5. Reibelement nach Anspruch 3 oder 4, dadurch gekennzeichnet, daß der Hülsenkörper in Schlitzlängsrichtung sich erstreckende Fasen aufweist.

6. Reibelement nach einem der Ansprüche 1 bis 5 , dadurch gekennzeichnet, daß die Federhülsen (30) aus gehärtetem Stahl bestehen.

7. Reibelement nach einem der Ansprüche 1 bis 6, dadurch gekennzeichnet, daß die Montagehülsen (36) in Längsrichtung geschlitzt (37) sind und ohne Vorspannung in den Federhülsen (30) sitzen.

8. Reibelement nach einem der Ansprüche 1 bis 7, dadurch gekennzeichnet, daß die Montagehülsen (36) einen an beiden Enden umbördelbaren Hülsenkörper aufweisen.

9. Reibelement nach einem der Ansprüche 1 bis 8, dadurch gekennzeichnet, daß die Montagehülsen (36) aus einem ohne große Verformungsarbeit plastisch deformierbaren Material bestehen.

10. Reibelement nach Anspruch 9, dadurch gekennzeichnet, daß die Montagehülsen (36) aus weichem Stahl bestehen.

11. Reibelement nach einem der Ansprüche 1 bis 10, dadurch gekennzeichnet, daß die Nabe aus zwei auf beiden Seiten der Scheibe (16) angeordneten Nabenplatten (12, 14) aufgebaut ist.

12. Verfahren zur Herstellung eines Reibelementes nach Anspruch 11, dadurch gekennzeichnet, daß beide Nabenplatten (12, 14) mit dem gleichen Formwerkzeug hergestellt und in der axialen Ausrichtung und relativen Winkelstellung an der Scheibe (16) angebracht werden, in der sie aus dem Formwerkzeug kommen.

## Claims

1. Friction element, in particular clutch disc, brake disc or the like, having a disc (16) with friction surfaces, having an inner hub which is thicker than the disc (16) and which is fixedly connected to the disc (16) without play by sprung sleeves (30) which serve to transmit shear force and thus torque and which are securely seated in flush bores (20, 28), and having securing elements which pass through the sprung sleeves (30) and which fix the sprung sleeves (30), characterized in that the disc (16) bears friction linings (24), and in that the securing elements are mounting sleeves (36) which can be flanged and which hold the disc (16) and the hub axially together in the flanged state.

2. Friction element according to Claim 1, characterized in that the sprung sleeves (30) are seated in the bores (20, 28) with pre-tension.

3. Friction element according to Claim 1 or 2, characterized in that the sprung sleeves (30) have a cylindrical sleeve body which is slotted in the longitudinal direction.

4. Friction element according to Claim 3, characterized in that the spring body is provided at at least one end with a chamfer (32).

5. Friction element according to Claim 3 or 4, characterized in that the spring body has chamfers extending in the longitudinal direction of the slot.

6. Friction element according to one of Claims 1 to 5, characterized in that the sprung sleeves (30) are of hardened steel.

7. Friction element according to one of Claims 1 to 6, characterized in that the mounting sleeves (36) are slotted (37) in the longitudinal direction and are seated in the sprung sleeves (30) without pre-tension.

8. Friction element according to one of Claims 1 to 7, characterized in that the mounting sleeves (36) have a sleeve body which can be flanged at both ends.

9. Friction element according to one of Claims 1 to 8, characterized in that the mounting sleeves (36) are of a material which is plastically deformable without much deformation work.

10. Friction element according to claim 9, characterized in that the mounting sleeves (36) are of soft steel.

11. Friction element according to one of Claims 1 to 10, characterized in that the hub is composed from two hub plates (12, 14) arranged on both sides of the disc (16).

12. Process for producing a friction element according to Claim 11, characterized in that both hub plates (12, 14) are produced using the same mould and are mounted on the disc (16) in the axial alignment and relative angular position in which they emerge from the mould.

## Revendications

1. Elément de friction, en particulier disque d'embrayage, disque de frein ou similaire, avec un disque (16) présentant des surfaces de friction, avec un moyeu intérieur qui est plus épais que le disque (16) et qui est assemblé fixement, libre de jeu, avec le disque (16) par des douilles à ressort (30) servant à la transmission de la force de cisaillement et ainsi du moment de torsion, reposant de manière imperdable dans des trous (20, 28) en alignement et avec des éléments de fixation traversant les douilles à ressort (30), qui fixent les douilles à ressort (30), caractérisé en ce que le disque (16) porte des garnitures de friction (24), et en ce que les éléments de fixation sont des douilles de montage (36) pouvant être rabattues, qui maintiennent le disque (16) et le moyeu dans le sens axial, à l'état rabattu.

2. Elément de friction selon la revendication 1, caractérisé en ce que les douilles à ressort (30) reposent dans les trous (20, 28) avec une précontrainte.

3. Elément de friction la revendication 1 ou 2, caractérisé en ce que les douilles à ressort (30) présentent un corps de douille cylindrique fendu dans le sens longitudinal.

4. Elément de friction selon la revendication 3, caractérisé en ce que le corps de douille est pourvu au moins à une extrémité d'un chanfrein (32).

5. Elément de friction selon la revendication 3 ou 4, caractérisé en ce que le corps de douille présente des chanfreins s'étendant dans le sens longitudinal des fentes.

6. Elément de friction selon l'une quelconque des revendications 1 à 5, caractérisé en ce que les douilles à ressort (30) sont constituées en acier trempé.

7. Elément de friction selon l'une quelconque des revendications 1 à 6, caractérisé en ce que les douilles de montage (36) sont fendues dans le sens longitudinal (37) et reposent sans précontrainte dans les douilles à ressort (30).

8. Elément de friction l'une quelconque des revendications 1 à 7, caractérisé en ce que les douilles de montage (36) présentent aux deux extrémités un corps de douille pouvant être rabattu.

9. Elément de friction selon l'une quelconque des revendications 1 à 8, caractérisé en ce que les douilles de montage (36) sont constituées d'un matériau plastiquement déformable sans gros travail de déformation.

10. Elément de friction selon la revendication 9, caractérisé en ce que les douilles de montage (36) sont constituées en acier mou.

11. Elément de friction selon l'une quelconque des revendications 1 à 10, caractérisé en ce que le moyeu est constitué de deux plaques de moyeu (12, 14) disposées sur les deux côtés du disque (16).

12. Procédé pour la fabrication d'un élément de friction selon la revendication 11, caractérisé en ce que les deux plaques de moyeu (12, 14) sont fabriquées avec le même outil de formage et sont montées dans l'orientation axiale et l'angle relatif sur le disque (16) selon lesquels elles sortent de l'outil de formage.
